# EUROPÄISCHE PATENTSCHRIFT

(11) **EP 2 543 801 B1**
(45) Veröffentlichungstag und Bekanntmachung des Hinweises auf die Patenterteilung: **14.06.2017**
(21) Anmeldenummer: 12175254.7
(22) Anmeldetag: 06.07.2012
(51) Int. Cl.: E05B 77/06, E05B 85/14

(54) **Sichere Türgriffeinheit**
Secure door handle unit
Unité de poignée de porte sécurisée

(30) Priorität: 06.07.2011 DE 102011051617
(43) Veröffentlichungstag der Anmeldung: 09.01.2013
(73) Patentinhaber: Huf Hülsbeck & Fürst GmbH & Co. KG, 42551 Velbert (DE)
(72) Erfinder: Beck, Andreas, 44795 Bochum (DE)
(74) Vertreter: Bals, Rüdiger

(56) Entgegenhaltungen:
- EP-A1- 1 593 802
- EP-A2- 2 325 419
- WO-A1-2006/003197
- WO-A2-2012/028325
- DE-U1-202009 017 667
- FR-A1- 2 876 135
- FR-A1- 2 940 813

## Beschreibung

Die vorliegende Erfindung ist auf eine Türgriffeinheit für ein Schloss bei einem Fahrzeug mit einem Türgriff, der zum Öffnen einer Tür, Klappe oder dergleichen durch einen Benutzer in einem Lagerraum bewegbar gelagert ist, gerichtet, gemäß dem Oberbegriff von Anspruch 1. Ferner betrifft die Erfindung auch ein Verfahren zur Sicherung einer Türgriffeinheit für ein Schloss bei einem Fahrzeug mit einem Türgriff, der zum Öffnen einer Tür, Klappe oder dergleichen durch einen Benutzer im Lagerrahmen bewegbar gelagert ist, gemäß dem Oberbegriff von Anspruch 13. Der Türgriff einer derartigen Türgriffeinheit weist zumindest eine Ruhestellung und eine Arbeitsstellung auf. Ferner ist eine mechanische Kopplungseinheit vorgesehen, durch die eine Bewegung des Türgriffs von seiner Ruhestellung in seine Arbeitsstellung auf ein Schloss übertragbar ist, um das Schloss öffnen zu können, wodurch sich auch die Tür, Klappe oder dergleichen öffnen lässt. Des Weiteren weist die Crashsperre zumindest eine Normallage und eine Blockierlage auf, wobei die Crashsperre in ihrer Normallage eine Bewegung des Türgriffs und/oder der Kopplungseinheit zur Betätigung des Schlosses zulässt und in der Blockierlage, die bei oder nach Einwirkung einer Beschleunigungskraft vorliegt, die durch insbesondere einen Unfall verursacht wird, eine Bewegung des Türgriffs und/oder der Kopplungseinheit derart blockiert, dass eine Betätigung des Schlosses vermieden bzw. verhindert wird.

Bei derartigen Türgriffeinheiten werden verschiedene Maßnahmen getroffen, um z. B. bei einem Seitenaufprall eine ungewollte Bewegung des Türgriffs und damit ein Öffnen des Schlosses zu verhindern. So können derartige Türgriffeinheiten einerseits mit einem Massenausgleichsgewicht ausgestattet sein, was die Masse des Türgriffs ausgleichen soll. Zusätzlich kann eine Crashsperre eingesetzt werden, die einer möglichen Bewegung des Türgriffs bei der Einwirkung einer Beschleunigungskraft voreilt, um die Bewegung des Türgriffs im Vorfeld zu blockieren. Als Stand der Technik sei beispielsweise die Druckschrift DE 199 29 022 C2 benannt. Auch bei dieser Türgriffeinheit dient die Crashsperre als flinke Sicherung, die den Türgriff formschlüssig in seiner Ruhelage arretiert und die Massensperre dient als träge Sicherung, die den Beschleunigungskräften am Türgriff grundsätzlich entgegenwirkt.

Des Weiteren ist aus der Druckschrift DE 10 2009 053 553 A1 bekannt, dass durch die flinke Crashsperre eine Zusatzkraft auf den Türgriff wirkt, wodurch ebenfalls sicher vermieden werden soll, dass es zu einer ungewollten Bewegung des Türgriffs kommt. Diese Crashsperre kann jedoch nach ihrer erstmaligen Aktivierung nur durch einen gezielten Eingriff in die Türgriffeinheit wieder deaktiviert werden, so dass der Türgriff wieder im Normalbetrieb benutzt werden kann. Üblicherweise erfolgt die Verstellung der Crashsperre von der Aktivierungslage in die Deaktivierungslage durch geschulte Fachkräfte in einer Werkstatt.

Es ist somit Aufgabe der vorliegenden Erfindung, eine Türgriffeinheit und ein Sicherungsverfahren hierzu bereit zu stellen, die die Tür, Klappe oder dergleichen auch bei unterschiedlich einwirkenden Beschleunigungskräften, die beispielsweise durch einen Crash verursacht sind, durch die vorgesehene Crashsperre sicher zuhält, wobei der Türgriff nach einer Aktivierung der Crashsperre durch eine gewohnte Betätigung des Türgriffs normal weiter benutzbar ist.

Zur Lösung dieser Aufgabe wird eine Türgriffeinheit für ein Schloss bei einem Fahrzeug mit den Merkmalen des Anspruchs 1, insbesondere aus dem kennzeichnenden Teil vorgeschlagen. Ebenfalls wird die vorliegende Aufgabe auch durch ein Verfahren zur Sicherung der Türgriffeinheit gelöst mit den Merkmalen des Anspruchs 12, insbesondere aus dem kennzeichnenden Teil. In den abhängigen Ansprüchen sind bevorzugte Weiterbildungen der Erfindung aufgeführt.

Die erfindungsgemäße Türgriffeinheit dient bei einem Fahrzeug zum Öffnen einer Tür, einer Heckklappe, Handschuhfachdeckel oder dergleichen (im nachfolgenden Text vereinfacht nur als Tür genannt) durch einen Benutzer, in dem das vorgesehene Schloss betätigt werden kann. Üblicherweise ist dazu ein Türgriff beweglich an einer Außenseite der Tür angeordnet, wobei der Türgriff direkt oder indirekt in einem Lagerrahmen bewegbar gelagert ist, der üblicherweise an einer Innenseite der Tür angeordnet ist. Der Türgriff selbst kann zumindest eine Ruhestellung und eine Arbeitsstellung einnehmen, wobei die Bewegung des Türgriffs von der Ruhestellung in die Arbeitsstellung mittels einer mechanischen Kopplungseinheit auf das Schloss an der Tür übertragbar ist. Die mechanische Kopplungseinheit kann ebenfalls dreh- bzw. schwenkbar in dem Lagerrahmen des Türgriffs angeordnet sein und steht in mechanischer Wirkverbindung mit dem Türgriff. In der Regel wird die vom Türgriff eingeleitete Bewegung der mechanischen Kopplungseinheit direkt oder indirekt über ein Übertragungselement auf das Schloss der Tür übertragen. Dieses Übertragungselement kann z. B. aus einer Stange, einem Bowdenzug oder dergleichen bestehen. Des Weiteren weist die Türgriffeinheit eine Crashsperre auf, die zumindest eine Normallage und eine Blockierlage inne haben kann. In der Normallage der Crashsperre ist eine gewohnte Bewegung des Türgriffs und/oder der Kopplungseinheit zur Betätigung des Schlosses zulässig. In der Blockierlage die bei oder nach Einwirkung einer Beschleunigungskraft vorliegt, insbesondere bei einem Unfall, ist eine Bewegung des Türgriffs und/oder der Kopplungseinheit derart blockiert, dass eine Betätigung des Schlosses vermieden ist. Dieser Fall wird auch als Aktivierung der Crashsperre bezeichnet. Folglich sichert die vorliegende Crashsperre den Türgriff gegen eine ungewollte Bewegung im Crashfall, um somit ein Öffnen des Schlosses und damit ein Öffnen der Tür am Fahrzeug im Crashfall sicher zu vermeiden.

Erfindungsgemäß ist es bei dieser Türgriffeinheit vorgesehen, dass die Crashsperre in ihrer Blockierlage durch eine Bewegung des Türgriffs und/oder der Kopplungseinheit in die Normallage überführbar ist. Da sich die Crashsperre bereits in ihrer Blockierlage befindet, fand bereits eine Einwirkung der Beschleunigungskräfte auf den Türgriff statt, wodurch die Crashsperre in ihrer Blockierlage aktiviert worden ist. Aus dieser Blockierlage ist die Crashsperre nur durch eine zusätzliche Bewegung des Türgriffs und/oder der Kopplungseinheit in die Normallage überführbar. Dabei wird diese zusätzliche Bewegung des Türgriffs zunächst von der Crashsperre geblockt, so dass eine Betätigung des Schlosses weiterhin vermieden ist. Folglich kann die gewohnte Bewegung des Türgriffs von seiner Ruhestellung nicht bis zur Arbeitsstellung des Türgriffs durchgeführt werden, da die Crashsperre das erreichen der Arbeitsstellung blockiert. Erst wenn sich der Türgriff wieder in Richtung seiner Ruhestellung bewegt, kann sich die Crashsperre in ihre Normallage bewegen. Somit ist es nach einem einmaligen Auslösen der Crashsperre erforderlich, dass eine wiederholte Betätigung des Türgriffs aus seiner Ruhestellung in Richtung seiner Arbeitsstellung erforderlich ist, um die Crashsperre zu deaktivieren, wobei die Crashsperre von zumindest einer Blockierlage in die Normallage überführt wird. Bei der ersten Betätigung des Türgriffes erreicht jedoch der Türgriff nicht seine Arbeitsstellung, da diese Bewegung noch weiterhin von der Crashsperre, die sich in zumindest einer Blockierlage befindet, blockiert ist. Erst nachdem die Crashsperre wieder ihre Normallage eingenommen hat, kann der Türgriff von seiner Ruhestellung in die Arbeitsstellung überführt werden, wodurch das Schloss an der Tür geöffnet werden kann.

Hierbei kann die Crashsperre in ihrer Blockierlage nur durch eine (gewohnte bzw. übliche) Bewegung des Türgriffs und/oder der Kopplungseinheit in die Normallage überführbar sein. Folglich ist es nicht notwendig, nach einem Crash die Werkstatt aufzusuchen, um die Crashsperre in der Türgriffeinheit zu deaktivieren bzw. in ihre Normallage zu überführen. Diese Maßnahme wird durch die zusätzliche (Entriegelungs-)Bewegung des Türgriffs und/oder der Kopplungseinheit ersetzt. Hierbei kann jedoch nicht - wie zuvor beschrieben - der Türgriff bis in die Arbeitsstellung bewegt werden.

Auch sei an dieser Stelle erwähnt, dass die Bewegung des Türgriffs und/oder der Kopplungseinheit zur Deaktivierung der Crashsperre der normalen Ziehbewegung zum Öffnen des Schlosses entspricht. Somit ist sichergestellt, dass nach einem Unfall Helfer von außen die Tür durch eine normale Bewegung des Türgriffs öffnen können. Intuitiv werden diese Helfer zumindest zweimal an dem Türgriff ziehen, um die Tür zu öffnen. Damit ist sichergestellt, dass eine schnelle Hilfe für die Fahrzeuginsassen möglich ist, die nicht speziell auf das Öffnen von Türen nach einem Crashfall geschult sein müssen.

Des Weiteren weist die Crashsperre zumindest zwei Blockierlagen auf. Hierbei weist die Crashsperre eine erste Blockierlage durch die Einwirkung einer Beschleunigungskraft auf, die jedoch nur während der Einwirkung der Beschleunigungskraft vorgesehen ist. Folglich kann diese erste Blockierlage eine zeitlich instabile Lage der Crashsperre darstellen, aus der die Crashsperre zurück in ihre Normallage überführbar ist. Des Weiteren weist die Crashsperre auch eine zweite Blockierlage auf, in der die Crashsperre zeitlich stabil gehalten ist. Die Crashsperre ist durch eine Feder mechanisch belastet. Diese Feder dient dazu, die Crashsperre aus der ersten Blockierlage in die zweite Blockierlage zu überführen. Die Crashsperre kann aus der ersten Blockierlage auch direkt in die zweite Blockierlage überführt werden, unabhängig davon, ob auch eine Bewegung des Türgriff und/oder der Kopplungseinheit durch die Einwirkung der Beschleunigungskraft erfolgt ist. In dieser zweiten Blockierlage kann die Crashsperre nur durch die zuvor beschriebene (Entriegelungs-) Bewegung des Türgriffs und/oder der Kopplungseinheit wieder in die Normallage überführt werden. Diese Bewegung wird im Folgenden auch als Entriegelungsbewegung des Türgriffs und/oder der Kopplungseinheit bezeichnet. Es sei noch einmal zur Klarstellung erwähnt, dass die Crashsperre auch in ihrer zweiten Blockierlage eine Bewegung des Türgriffs und/oder der Kopplungseinheit bis in die Arbeitsstellung blockiert, um somit sicher das Betätigen des Schlosses zu vermeiden. Erst durch eine darauffolgende, zweite Bewegung des Türgriffs kann dann der Türgriff von seiner Ruhestellung in seine Arbeitsstellung überführt werden, wodurch eine Betätigung des Schlosses realisiert wird. Da sich jedoch dann die Crashsperre wieder in ihrer Normallage befindet, ist diese auch in der Lage auf weitere Einwirkungen einer Beschleunigungskraft zu reagieren, um ggf. erneut eine Bewegung des Türgriffs und/oder der Kopplungseinheit blockieren zu können.

Des Weiteren kann es vorgesehen sein, dass die Crashsperre und/oder die Kopplungseinheit bewegbar am Lagerrahmen gelagert sind. Hierzu können jeweils entsprechende Achsen vorgesehen sein, die im oder am Lagerrahmen angeordnet sind, und um die die Crashsperre und/oder die Kopplungseinheit drehbar bzw. bewegbar gelagert sind. Ferner können die Crashsperre und/oder die Kopplungseinheit mit jeweils einer festen Masse verbunden sein, um selbstständig die gewünschten Bewegung bei einer Einwirkung der Beschleunigungskraft vollziehen zu können. Die Crashsperre eilt jedoch der Kopplungseinheit aufgrund ihrer geringeren Masse zeitlich voraus und ist somit sicher in der Lage, die Kopplungseinheit in einer Blockierlage zu blockieren. Die Kopplungseinheit ist aufgrund ihrer höheren Masse träger und kann somit nicht genauso schnell der Bewegung der Crashsperre bei einem Unfall folgen.

Um die erfindungsgemäße Crashsperre besonders stabil in der Türgriffeinheit einzubetten, kann eine Aufnahme beispielsweise in Form eines kastenförmiges Rahmen mit zumindest drei Seiten, insbesondere aus dem Lagerrahmen gebildet sein, in dem die Crashsperre an ihrer Achse gelagert ist. Diese kastenförmige Aufnahme verhindert einerseits, dass Gegenstände in den Bewegungsbereich der Crashsperre eindringen können und andererseits wirkt dieser Verformungen, die bei einem Crash entstehen, entgegen.

Optional ist es denkbar, dass die Crashsperre drehbar um eine Achse und axial verschiebbar zu dieser Achse gelagert ist, um zumindest die Normallage und eine Blockierlage zu erreichen. Durch die Drehung der Crashsperre um ihre Achse kann sie ihre erste Blockierlage erreichen. Somit ist es nicht erforderlich, dass die Crashsperre zur Erreichung der ersten Blockierlage auch noch axial längs verschoben wird, was jedoch denkbar ist. Die zweite Blockierlage wird von der Crashsperre erreicht, nachdem sie aus ihrer ersten Blockierlage entgegengesetzt der ersten Drehrichtung gedreht und axial längsverschoben wird. In dieser zweiten Blockierlage verharrt die Crashsperre zeitlich stabil. Die erste Blockierlage der Crashsperre ist hingegen instabil ausgestaltet, so dass die Crashsperre hier nur für einen kurzen Zeitraum verweilt und danach in die Normallage oder ggf. die zweite Blockierlage überwechselt. Unabhängig davon, in welche Lage die Crashsperre danach überführt wird, bleibt diese jedoch voll funktionsfähig, so dass sie bei einer weiteren Einwirkung einer Beschleunigungskraft wieder aktiviert wird, wenn sie aus der Normallage kommt, oder aktiviert bleibt, falls sie noch in der zweiten Blockierlage angeordnet ist. Somit ist sichergestellt, dass auch bei einem Flattern des Türgriffes eine Betätigung des Schlosses sicher vermieden ist.

Um die Crashsperre aus zumindest einer Blockierlage in die Normallage zu überführen, kann die Crashsperre durch die Feder mechanisch belastet sein. Die Feder kann insbesondere als Druck- und/oder Drehfeder ausgestaltet sein und zwischen dem Lagerrahmen und der Crashsperre angeordnet sein. Um Platz zu sparen, kann die Feder spiralförmig ausgestaltet sein und um die Achse der Crashsperre angeordnet sein. Um die Crashsperre aus der ersten Blockierlage in die zweite Blockierlage zu überführen, kann die Feder für eine Längsverschiebung der Crashsperre auf der Achse sorgen. Folglich kann die Feder dazu dienen, die Crashsperre aus der ersten Blockierlage zurückzudrehen in Richtung der Normallage und gleichzeitig die Crashsperre längs auf ihrer Achse zu verschieben, um die zweite Blockierlage zu erreichen.

Um zu erreichen, dass die Crashsperre in jedem Fall bei einer Einwirkung einer Beschleunigungskraft eine Bewegung des Türgriffs und/oder der Kopplungseinheit blockiert, kann die Crashsperre in zumindest einer, vorzugsweise in allen Blockierlagen formschlüssig die Bewegung des Türgriffs und/oder der Kopplungseinheit blockieren. Um den erwähnten Formschluss zu erhalten, kann an dem Türgriff und/oder der Kopplungseinheit ein Vorsprung vorgesehen sein, der mit einem Anschlag an der Crashsperre formschlüssig mechanisch zusammenwirkt. Somit kann nur durch eine Zerstörung der Türgriffseinheit die Crashsperre in einer Blockierlage überwunden werden, um den Türgriff und/oder die Kopplungseinheit direkt in ihre Arbeitsstellung zu überführen. Selbstverständlich ist auch eine kinematische Umkehr zwischen dem Vorsprung an dem Türgriff und/oder der Kopplungseinheit und dem entsprechenden Anschlag an der Crashsperre denkbar, um den gewünschten Formschluss in einer Blockierlage der Crashsperre zu erreichen.

Des Weiteren kann es vorgesehen sein, dass die Crashsperre in der ersten Blockierlage nur um die Achse gedreht ist und die Crashsperre insbesondere einen ersten Anschlag zum Lagerrahmen aufweist. Dieser Anschlag kann als Drehanschlag oder als seitlicher Führungsanschlag für die Längsverschiebung der Crashsperre dienen. Des Weiteren kann die Crashsperre einen zweiten Anschlag zum Lagerrahmen aufweisen, der ebenfalls als Drehanschlag, insbesondere für die erste Blockierlage dient. Dieser zweite Drehanschlag kann an einem scheibenförmigen Segment der Crashsperre angeordnet sein, wobei dieser zweite Anschlag quer herausstehend zur ebenen Ausrichtung des scheibenförmigen Segments angeordnet sein kann. Das scheibenförmige Segment der Crashsperre kann ferner über eine Ausnehmung bzw. einen Freiraum verfügen, der dazu dient, dass im Normalfall der Vorsprung von der Kopplungseinheit ungehindert an der Crashsperre vorbeigeführt wird, so dass eine ungehinderte Bewegung des Türgriff bzw. der Kopplungseinheit zwischen der Ruhestellung und der Arbeitsstellung möglich ist. Des Weiteren kann an der Crashsperre auch ein dritter Anschlag vorgesehen sein, der insbesondere an dem scheibenförmigen Segment der Crashsperre angeordnet ist und aus der ebenen Fläche des scheibenförmigen Segments herausstehend ausgebildet ist, wobei auch dieser dritte Anschlag mit einem Gegenanschlag am Lagerrahmen zusammenwirken kann. Der dritte Anschlag kann bogenförmig ausgestaltet sein. Durch diesen dritten Anschlag kann die Chrashsperre stabil in der zweiten Blockierlage gehalten sein. Folglich verhindert der dritte Anschlag, dass die Crashsperre aus der zweiten Blockierlage einfach zurückgedreht werden kann, um die Normallage zu erreichen. Die Crashsperre ist in der zweiten Blockierlage um ihre Achse gedreht und axial längsverschoben zu ihrer Normallage.

Der erste und/oder der zweite und/oder der dritte Anschlag wirken formschlüssig mit entsprechenden Gegenanschlägen an dem Lagerrahmen zusammen. Diese Gegenanschläge können aber auch indirekt am Lagerrahmen befestigt sein.

Des Weiteren ist es denkbar, dass ebenfalls der zweite Anschlag der Crashsperre formschlüssig eine Entriegelungsbewegung des Türgriffs und/oder der Kopplungseinheit blockiert, sofern die Crashsperre zuvor in der zweiten Blockierlage angeordnet war. Somit kann der zweite Anschlag mehrere Funktionen übernehmen, indem er einerseits die Drehbewegung der Crashsperre in der ersten Blockierlage beschränkt und andererseits den Türgriff und/oder die Kopplungseinheit formschlüssig in einer Blockierlage blockiert.

In der ersten Blockierlage der Crashsperre kann der Vorsprung an der Kopplungseinheit mit dem scheibenförmigen Segment der Crashsperre insbesondere formschlüssig zusammenwirken. In dieser ersten Blockierlage steht die Crashsperre mit dem scheibenförmigen Segment einer Bewegung des Vorsprungs der Kopplungseinheit entgegen, so dass diese nicht weiter in Richtung Arbeitsstellung gedreht werden kann. Hierbei kann die Crashsperre mit ihrem ersten Anschlag seitlich an einem Gegenanschlag am Lagerrahmen anliegen, um einer Längsbewegung der Crashsperre durch die Druckkraft des Vorsprungs der Kopplungseinheit entgegenzuwirken.

In der zweiten Blockierlage kann die Crashsperre einerseits gedreht und andererseits längsverschoben sein, wobei der dritte Anschlag der Crashsperre formschlüssig mit dem entsprechenden Gegenanschlag am Lagerrahmen zusammenwirkt. Dieser Formschluss kann nur durch eine Längsverschiebung der Crashsperre in Richtung der Normallage aufgehoben werden. Wird nun eine (Entriegelungs-)Bewegung des Türgriffs und/oder der Kopplungseinheit durchgeführt, so drückt der Vorsprung der Kopplungseinheit auf das Scheibensegment an der Crashsperre, wodurch diese zunächst längsverschoben werden muss, um überhaupt eine weitere Bewegung des Türgriffs oder der Kopplungseinheit in Richtung der Arbeitsstellung zu ermöglichen. Durch diese Längsverschiebung der Crashsperre wird der Formschluss vom dritten Anschlag mit dem entsprechenden Gegenanschlag am Lagerrahmen aufgehoben, so dass die Crashsperre sich nunmehr frei in Richtung ihrer Normallage drehen kann. Ebenfalls lässt sich nunmehr auch der Türgriff und/oder die Kopplungseinheit ein wenig weiterbewegen, wobei jedoch jetzt der Vorsprung von der Kopplungseinheit formschlüssig auf den zweiten Anschlag, der quer am Scheibensegment der Crashsperre angeordnet ist, trifft und in dieser Position ebenfalls formschlüssig blockiert wird. Somit führt zwar eine (Entriegelungs-)Bewegung am Türgriff bzw. der Kopplungseinheit zu einer Deaktivierung der Crashsperre, indem diese aus ihrer zweiten Blockierlage längsverschoben wird, wobei jedoch die Blockade zwischen der Kopplungseinheit und der Crashsperre noch nicht aufgehoben ist. Erst nachdem der Türgriff und/oder die Kopplungseinheit zurück in die Ruhestellung bewegt worden ist, lässt sich die Arbeitsstellung erreichen, da in der Zwischenzeit die Crashsperre wieder ihre Normallage eingenommen hat.

Im Rahmen der Erfindung kann es damit vorgesehen sein, dass die Crashsperre, die stabile, zweite Blockierlage durch eine zusätzliche (Entriegelungs-)Bewegung des Türgriffs und/oder der Kopplungseinheit verlässt. Hierbei kann die zusätzliche Bewegung des Türgriffs und/oder der Kopplungseinheit zu einer axialen Verschiebung der Crashsperre führen, so dass der dritte Anschlag wirkungsfrei mit dem Lagerrahmen ist. Ebenfalls kann der zweite Drehanschlag der Crashsperre formschlüssig die zusätzliche Bewegung des Türgriffs und/oder der Kopplungseinheit blockieren.

Zusätzlich ist die vorliegende Erfindung auch auf ein Verfahren gemäß dem Anspruch 13 insbesondere mit den Merkmalen aus dem kennzeichnenden Teil gerichtet. Hierbei ist es erfindungsgemäß vorgesehen, dass die Crashsperre in ihrer Blockierlage durch eine Bewegung des Türgriffs und/oder der Kopplungseinheit in die Normallage überführt wird. Bei dieser Bewegung handelt es sich um eine Entriegelungsbewegung des Türgriffs, die jedoch noch nicht zu einer Betätigung des Schlosses führen kann, da die Crashsperre immer noch die Bewegung des Türgriffs und/oder der Kopplungseinheit zuverlässig blockiert.

Das erfindungsgemäße Verfahren kann mit einer erfindungsgemäßen Türgriffeinheit durchgeführt werden.

Auch ist es denkbar, dass bei einer Einwirkung der Beschleunigungskraft die Crashsperre insbesondere durch eine Drehung selbstständig in die erste Blockierlage überführt wird und eine vorhandene Bewegung des Türgriffs und/oder Kopplungseinheit derart blockiert wird, dass eine Betätigung des Schlosses sicher vermieden wird. Durch diese geblockte Bewegung des Türgriffs und/oder der Kopplungseinheit kann verursacht werden, dass die Crashsperre anschließend wieder ihre Normallage einnimmt, da eben keine Längsverschiebung stattgefunden hat, um die Crashsperre in die zweite Blockierlage zu überführen. Die Rückdrehbewegung und die Längsverschiebungsbewegung der Crashsperre können durch die bereits erwähnte Feder selbstständig erfolgen.

Im Rahmen der Erfindung ist es ebenfalls denkbar, dass die Crashsperre aus der stabilen, zweiten Blockierlage ausschließlich durch eine zusätzliche (Entriegelungs-)Bewegung des Türgriffs und/oder der Kopplungseinheit in ihre Normallage überführt wird. Hierbei kann die zusätzliche Bewegung zunächst formschlüssig von der Crashsperre geblockt werden. Ebenfalls kann die Crashsperre erst dann ihre Normallage einnehmen, wenn der Türgriff sich in seine Ruhelage bewegt.

Weitere vorteilhafte Ausgestaltungen der Erfindung ergeben sich aus der nachfolgenden Beschreibung, den Ansprüchen sowie den Figuren. In den Figuren ist die Erfindung in einem grundlegenden Ausführungsbeispiel dargestellt. Es zeigen:
- Figur 1: eine Seitenansicht eines Fahrzeugs mit zwei erfindungsgemäßen Türgriffeinheiten,
- Figur 2: eine dreidimensionale schematische Rückansicht der Türgriffeinheit aus Figur 1 in einer Zwischenblockierlage,
- Figur 3: eine vergleichbare dreidimensionale Darstellung der Crashsperre aus Figur 2 in ihrer Normallage,
- Figur 4: eine vergleichbare Darstellung der Crashsperre aus Figur 3 in einer ersten Blockierlage der Crashsperre,
- Figur 5: eine vergleichbare Darstellung der Crashsperre aus Figur 4, wobei jedoch die Kopplungseinheit dargestellt ist,
- Figur 6: eine vergleichbare Darstellung der Crashsperre aus den Figuren 3 und 4 ohne die Kopplungseinheit in einer Zwischenblockierlage der Crashsperre,
- Figur 7: eine vergleichbare Darstellung der Crashsperre aus Figur 6 in der zweiten Blockierlage der Crashsperre,
- Figur 8: eine vergleichbare Darstellung der Crashsperre mit der Kopplungseinheit wie aus Figur 5 in der zweiten Blockierlage der Crashsperre,
- Figur 9: eine Rückansicht auf die Türgriffeinheit mit der Crashsperre in einer Zwischenstellung zwischen der Blockierlage und der Normallage, wobei die Crashsperre den Türgriff und/oder die Kopplungseinheit blockiert,
- Figur 10: eine vergleichbare Darstellung der Türgriffeinheit mit der Crashsperre zu Figur 8, wobei die Kopplungseinheit erkennbar ist und sich die Crashsperre in der Normallage befindet und
- Figur 11: ein Funktionsdiagramm für die erfindungsgemäße Türgriffeinheit bei einem Crash.

In den folgenden Figuren sind identische, technische Merkmale mit den gleichen Bezugszeichen versehen.

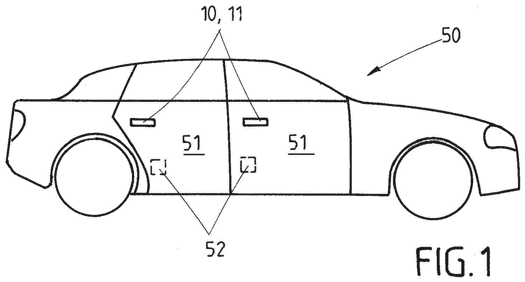

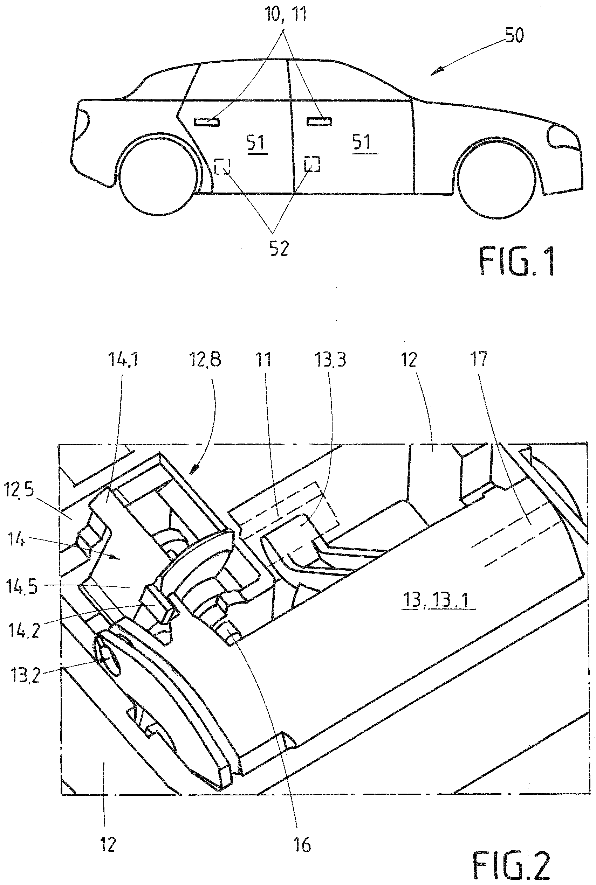

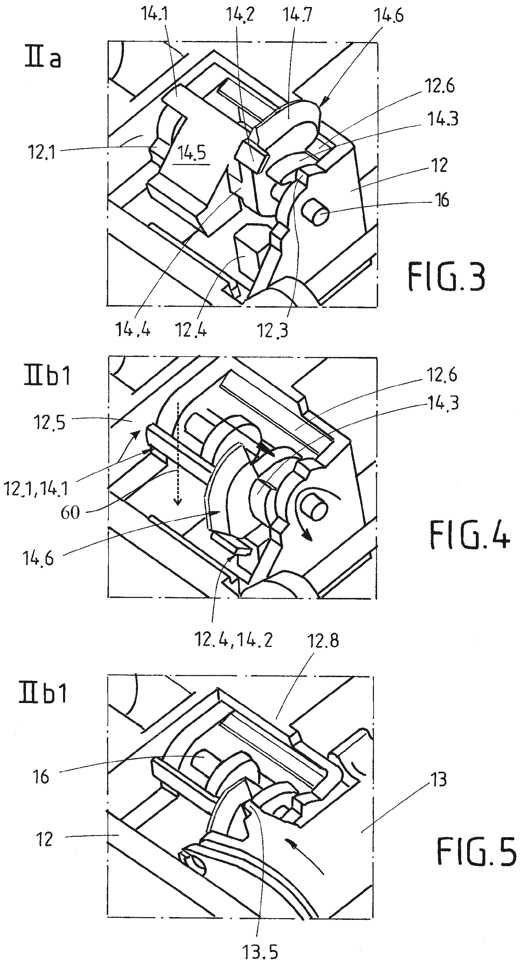

In der Figur 1 ist ein Fahrzeug 50, insbesondere in Form eines PKWs dargestellt, welches beispielsweise über vier Türen 51 verfügt, die über die Türgriffeinheiten 10, insbesondere die Türgriffe 11 geöffnet werden können. Die Türen 51 werden über die jeweiligen Schlösser 52 fest verschlossen und können von außen nur über eine jeweilige Bewegung des Türgriffs 11 geöffnet werden. Diese Bewegung am Türgriff 11 kann aus einer Zieh- und/oder Klappbewegung bestehen. Dabei wird der Türgriff 11 der erfindungsgemäßen Türgriffeinheit 10 von einer Ruhestellung la in eine Arbeitsstellung Ib überführt, wobei die entsprechende Bewegung des Türgriffs 11 mechanisch zumindest über eine Kopplungseinheit 13 auf das jeweilige Schloss 52 der Tür 11 übertragen wird. Durch diese Bewegung des Türgriffs 11 lässt sich das jeweilige Schloss 52 und somit die Tür 51 öffnen. In den nachfolgenden Figuren 2 bis 10 ist eine dreidimensionale Rückansicht der Türgriffeinheit 10 dargestellt, wobei der Fokus auf die Crashsperre 14 gerichtet ist. Um die Erfindung besser erkenntlich zu machen, wurde in den Figuren 3, 4, 6 und 7 auf eine Darstellung der Kopplungseinheit 13 verzichtet, die über ein Übertragungselement 13 das jeweilige Schloss 52 betätigt.

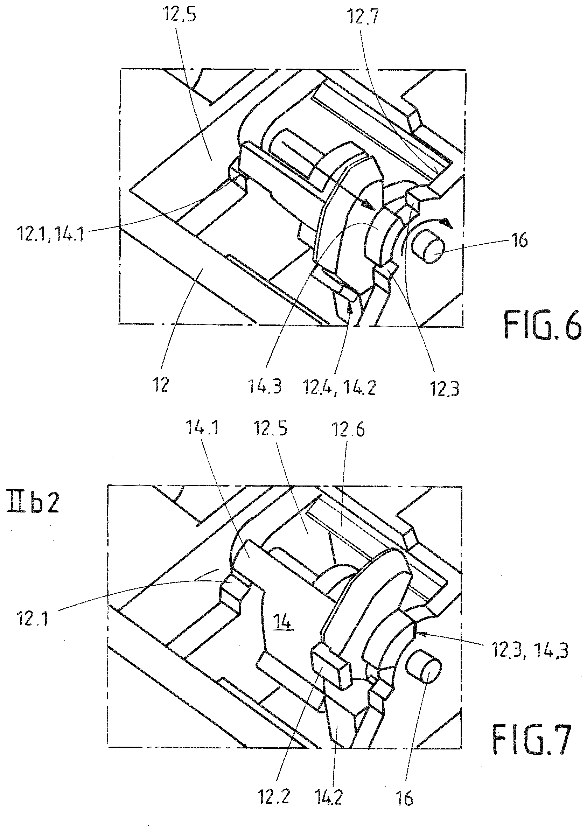

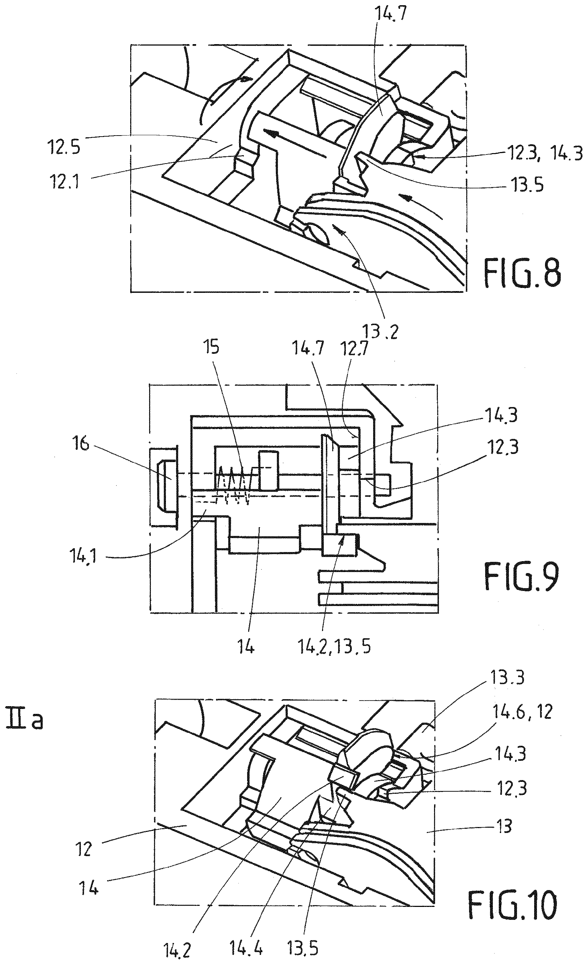

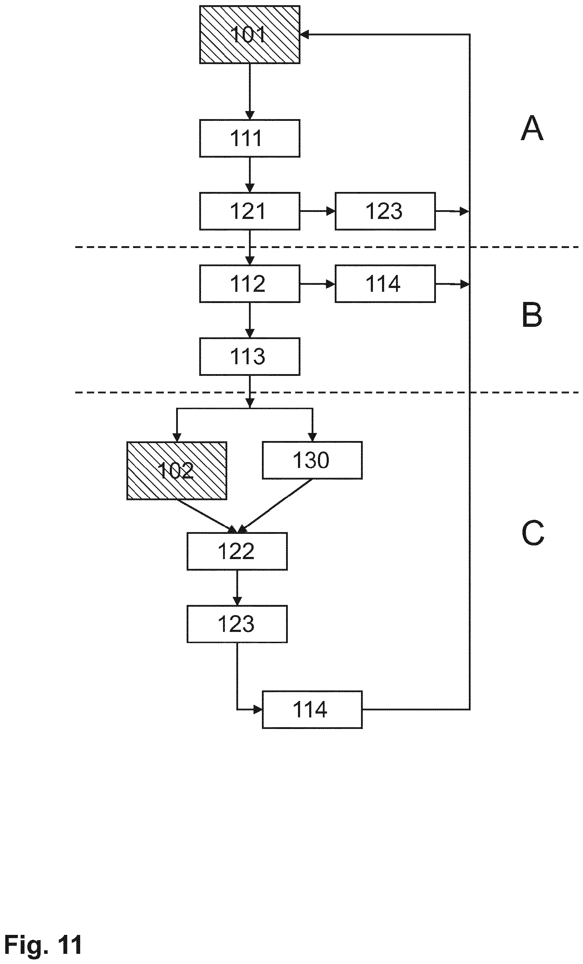

In den Figuren 3, 4 und 5 ist eine erste Phase A des Funktionsschemas der erfindungsgemäßen Türgriffeinheit 10 dargestellt. In den Figuren 6 und 7 ist eine zweite Phase B gezeigt. Die Figuren 8, 9 und 10 stellen eine dritte Phase C des Funktionsschemas der erfindungsgemäßen Türgriffeinheit 10 dar. Das gesamte Funktionsdiagramm ist rein schematisch in der Figur 11 dargestellt mit den einzelnen Phasen A, B und C.

In der Figur 2 ist die Türgriffeinheit 10 mit der Kopplungseinheit 13 und der Crashsperre 14 dargestellt. Ebenfalls ist ein Teil des Türgriffs 11, in Form eines Mitnahmehakens, gestrichelt angedeutet, der mechanisch in Wirkverbindung mit einer Aufnahme 13.3 der Kopplungseinheit 13 zusammenwirkt. Diese Aufnahme 13.3 ist im vorliegenden Fall heblförmig ausgestaltet und mit zusätzlichen Verstärkungsrippen versehen. Durch diese Aufnahme 13.3 wird eine Bewegung des Türgriffs 11 auf die Kopplungseinheit 13 eingeleitet. Die Kopplungseinheit 13 ist selbst drehbar über die Achse 17 an dem Lagerrahmen 12 befestigt. Die Achse 17 ist in der Figur 2 oben rechts ebenfalls gestrichelt angedeutet, da diese in dieser Darstellung nicht sichtbar ist. Die vom Türgriff 11 eingeleitete Bewegung auf die Kopplungseinheit 13 wird von dieser über einen Ansatz 13.2 auf das Übertragungselement zum Schloss 52 übertragen. Im vorliegenden Fall ist der Ansatz 13.2 für einen Bowdenzug ausgestaltet, der mit einem Ende in der dafür vorgesehen Bohrung formschlüssig gehalten ist. Zur zuverlässigen Führung des Bowdenzugs ist eine Führungsnut an der Unterseite der Kopplungseinheit 13 eingearbeitet. Die Kopplungseinheit 13 verfügt ferner über eine Ausgleichsmasse 13.1, die dazu dient, dem Gewicht des Türgriffs 11 bei einem Crash oder der Einwirkung einer Beschleunigungskraft entgegen zu wirken. Somit sollen sich die im Crashfall erzeugten Kräfte vom Türgriff 11 und der Kopplungseinheit 13 weitestgehend kompensieren. Die Ausgleichsmasse 13.1 ist jedoch nicht zwingend bei der vorgesehenen Kopplungseinheit 13 vorzusehen.

Ebenfalls ist in der Figur 2 deutlich die Crashsperre 14 in ihrer kastenförmigen Aufnahme 12.8 im Lagerrahmen 12 dargestellt. Diese Crashsperre 14 ist drehbar und auch längsverschiebbar an ihrer Achse 16 gelagert, wobei die beiden Achsenden der Achse 16 in der kastenförmigen Aufnahme 12.8 gehalten sind. Auch die Crashsperre 14 verfügt über eine Masse 14.5, um bei einer einwirkenden Beschleunigungskraft im Crashfall eine selbstständige Bewegung der Crashsperre 14 aus ihrer Normallage IIa in zumindest eine Blockierlage IIb zu erzeugen. Wie bereits zuvor beschrieben worden ist, eilt die Crashsperre 14 einer Bewegung der Kopplungseinheit zeitlich voraus, um eine Blockierung der Kopplungseinheit 13 zu bewirken. Ebenfalls ist es denkbar, dass die Crashsperre 14 auch direkt eine Bewegung des Türgriffs 11 blockiert. Im Weiteren wird jedoch ausschließlich beschrieben, wie die Crashsperre 14 eine Bewegung der Kopplungseinheit 13 blockiert, auch wenn die Erfindung nicht darauf beschränkt ist. In der Figur 2 ist die Crashsperre 14 in einer Zwischenstellung dargestellt, in der sie die Bewegung der Kopplungseinheit 13 in Richtung der Arbeitsstellung Ib formschlüssig verhindert.

In der Figur 3 ist die Crashsperre 14 in ihrer Normallage IIa dargestellt, hierbei schlägt die Crashsperre 14 mit einem Absatz in ihrem Scheibensegment 14.6 auf den Lagerrahmen 12, insbesondere auf die zweite Seite 12.6 der kastenförmigen Aufnahme 12.8. Die kastenförmigen Aufnahme 12.8 ist fast rechteckig aufgebaut mit vier Seiten. In der ersten Seite 12.5 und in der der dritten Seite 12.7 ist die Achse 16 gelagert. In dieser Normallage IIa kann der Türgriff 11 sowie die Kopplungseinheit 13 zwischen der Ruhestellung la und der Arbeitsstellung Ib frei hin und her bewegt werden. Zu diesem Zweck ist an der Crashsperre 14 eine Ausnehmung 14.4 bzw. ein Freiraum 14.4 vorgesehen, an der ein Vorsprung 13.5 der Kopplungseinheit 13 vorbei- bzw. durchgeführt werden kann (s. Figur 10). Diese Ausnehmung 14.4 gleicht einem abgetrennten Teil von dem Scheibensegment 14.6. Die dargestellte Crashsperre 14 weist die Anschläge 14.1, 14.2 und 14.3 auf, deren Funktionen im Folgenden noch näher beschrieben werden. Die Crashsperre 14 ist durch den ersten Anschlag 14.1 und den dritten Anschlag 14.3 mit einem geringen Spiel seitlich in der kastenförmigen Aufnahme 12.8 zwischen der ersten Seite 12.5 und der dritten Seite 12.7 im Lagerrahmen 12 gelagert. Durch die Einwirkung einer Beschleunigungskraft 60, die beispielsweise durch einen Crash verursacht wird, wird die Crashsperre 14 aufgrund ihrer Masse 14.5 im Gegenuhrzeigersinn um die Achse 16 gedreht, bis diese mit ihren Anschlägen 14.1 und/oder 14.2 am Lagerrahmen 12 bzw. den jeweiligen Gegenanschlägen anschlägt. Hierbei vollzieht die Crashsperre 14 eine Drehung um ca. 90° zwischen der Normallage IIa und einer ersten Blockierlage IIb1. Die Drehbewegung der Crashsperre im Gegenuhrzeigersinn kann sowohl durch den ersten Anschlag 14.1 als auch durch den zweiten Anschlag 14.2 gestoppt werden, die mit entsprechenden Gegenanschlägen 12.1 und 12.4 am Lagerrahmen 12 zusammenwirken. In der Figur 4 ist auch deutlich erkennbar, dass der zweite Anschlag 14.2 quer zur Ebene des Scheibensegments 14.6 von der Crashsperre 14 angeordnet ist und aus dieser Ebene herausragt.

In der Figur 5 ist dargestellt, wie nun die Crashsperre 14 in der ersten Blockierlage IIb1 eine Bewegung des Türgriffs 11 bzw. der Kopplungseinheit 13 sicher blockiert. Nachdem nun die Crashsperre 14 einer Bewegung der Kopplungseinheit 13 vorausgeeilt ist, bewegt sich diese auch in Richtung des dargestellten Pfeils (ebenfalls im Gegenuhrzeigersinn um die Achse 17). Durch diese Drehbewegung wird nun der Vorsprung 13.5 auf das Scheibensegment 14.6 gepresst, was eine weitere Drehung der Kopplungseinheit 13 verhindert. Durch den Anpressdruck der Kopplungseinheit 13 wird auch die gesamte Crashsperre 14 in Richtung der ersten Seite 12.5 vom Lagerrahmen 12 gedrückt. Hierbei schlägt der erste Anschlag 14.1 an der ersten Seite 12.5 vom Lagerrahmen 12 an, die einen ersten, seitlichen Gegenanschlag 12.1 bildet, wodurch eine weitere Längsbewegung der Crashsperre 14 sicher verhindert ist. Somit wird die Drehbewegung der Kopplungseinheit 13 formschlüssig, insbesondere durch das Zusammenwirken des Scheibensegments 14.6 mit dem Vorsprung 13.5, verhindert. Die Crashsperre 14 verharrt auch solange in der ersten Blockierlage IIb1 bis der Anpressdruck von der Kopplungseinheit 13 nachlässt. Durch die großflächige Ausgestaltung des Scheibensegments 14.6 ist sichergestellt, dass die Crashsperre 14 auch noch mit der Kopplungseinheit 13 formschlüssig zusammenwirkt, wenn sich bereits die Crashsperre aus ihrer ersten Blockierlage IIb1 in Richtung der Normallage IIa, d. h. im Uhrzeigersinn dreht. Somit können auch Flatterbewegungen und zeitlich kurz hintereinander auftretende Beschleunigungskräfte 60 sicher von der Crashsperre 14 abgefangen werden.

In der Figur 6 ist nun gezeigt, wie die Crashsperre 14 nach dem Erreichen ihrer ersten Blockierlage IIb1 in Richtung der zweiten Blockierlage IIb2 überführt wird. Ausgehend von der ersten Blockierlage IIb1 (s. Figur 4 und 5) wird die Crashsperre 14 durch eine in der Figur 9 dargestellte Feder 15 längsverschoben und in Uhrzeigerrichtung (in Richtung der Normallage IIa) gedreht. Die Längsrichtung und die Drehrichtung sind durch die entsprechenden Pfeile in der Figur 6 dargestellt. Die hierfür erforderliche Feder 15 ist als Dreh- und Druckfeder vorgesehen. Selbstverständlich können auch mehrere Federn zum Einsatz kommen, um die gewünschte Bewegung der Crashsperre 14 zu erreichen. So ist es z. B. auch denkbar, dass eine Längsverschiebung der Crashsperre 14 durch einen rampenförmigen Vorsprung an der ersten Seite 12.5 des Lagerrahmens 12 erzeugbar ist, der z. B. mit dem ersten Anschlag 14.1 der Crashsperre zusammenwirkt. Wie in Figur 6 weiter erkennbar ist, wurde die Crashsperre 14 längsverschoben, so dass ein dritter Anschlag 14.3 in einen Zwischenraum zwischen den dritten Gegenanschlägen 12.3 hineinragt. Der dritte Anschlag 14.3 ist bogenförmig ausgestaltet und ragt an einer Stirnseite des Scheibensegments 14.6 heraus. Da in der Figur 6 die Drehbewegung der Crashsperre 14 im Uhrzeigersinn noch nicht blockiert ist, kann diese weiter gedreht werden, bis sie aus dieser Zwischenlage ihre zweite Blockierlage IIb2 einnimmt.

In der Figur 7 ist die zweite Blockierlage IIb2 dargestellt, die eine stabile Lage der Crashsperre 14 darstellt. Die erste Blockierlage IIb1 der Crashsperre 14 ist hingegen eine zeitlich instabile Lage der Crashsperre, da diese immer durch die Feder 15 im Gegenuhrzeigersinn in Richtung der Normallage IIa oder in Richtung der zweiten Blockierlage IIb2 gedreht wird.

In der Figur 7 ist die Drehbewegung der Crashsperre 14 durch den dritten Anschlag 14.3 mit einem dritten Gegenanschlag 12.3 am Lagerrahmen 12 gestoppt. Aus dieser zweiten Blockierlage IIb2 ist die Crashsperre 14 nur in Gegenuhrzeigerrichtung drehbar und längsverschiebbar in Richtung der ersten Seite 12.5 vom Lagerrahmen 12. Auch in dieser zweiten Blockierlage IIb2 blockiert die Crashsperre 14 eine Bewegung der Kopplungseinheit 13 zuverlässig, wie in den nachfolgenden Figuren 8 und 9 gezeigt ist.

In der Figur 8 ist nun die Crashsperre 14 in der Betriebslage IIb2 vergleichbar zu Figur 7 dargestellt, wobei auch die Kopplungseinheit 13 eingezeichnet ist. Diese wird durch den Crash in Richtung des dargestellten Pfeils, d. h. im Gegenuhrzeigersinn gedreht und drückt nun mit ihrem Vorsprung 13.5 auf das Scheibensegment 14.6 der Crashsperre 14. Das Scheibensegment 14.6 weist am äußeren Rand eine angeschrägte Angriffsfläche 14.7 auf, die mit dem Vorsprung 13.5 im Crashfall zusammenwirkt. Durch den Anpressdruck des Vorsprungs 13.5 auf die angeschrägte Angriffsfläche 14.7 wird die Crashsperre 14 ausschließlich längsverschoben in Richtung der ersten Seite 12.5 vom Lagerarm 12 (s. auch Längspfeil). Folglich lässt sich auch die Kopplungseinheit 13 etwas weiter im Gegenuhrzeigersinn drehen, wobei sie jedoch nicht die Arbeitsstellung Ib erreicht, die notwendig ist, um das Schloss 52 zu betätigen. Wie in der Figur 8 weiter erkennbar ist, kann sich die Crashsperre 14 zunächst nicht drehen, da der zweite Anschlag 14.2 über die Breite des dritten Gegenanschlags 12.3 vom Lagerrahmen 12 entlang gleiten muss. Erst wenn die beiden Anschläge 12.3 und 14.3 nicht mehr in Kontakt stehen, lässt sich die Crashsperre 14 im Uhrzeigersinn drehen.

In der Figur 9 ist dargestellt, dass nun der dritte Anschlag 14.3 an dem dritten Gegenanschlag 12.3 vom Lagerrahmen 12 längs vorbeigeführt worden ist und die Crashsperre 14 in Richtung der Normallage IIa (im Uhrzeigersinn) gedreht worden ist. Somit konnte sich auch die Kopplungseinheit 13 etwas weiter im Gegenuhrzeigersinn drehen und zwar in Richtung der Arbeitsstellung Ib. Allerdings kann sie diese Arbeitsstellung Ib nicht erreichen, da nunmehr der Vorsprung 13.5 von der Kopplungseinheit 13 auf den zweiten Anschlag 14.2 der Crashsperre schlägt, wodurch die weitere Bewegung der Kopplungseinheit 13 formschlüssig blockiert ist. Aus dieser Zwischenstellung, die auch eine Blockierlage darstellt, lässt sich die Kopplungseinheit 13 nur durch eine Drehung im Uhrzeigersinn, d. h. in Richtung ihrer Ruherstellung la bewegen. Sobald also nun ein weiterer Crash oder eine manuelle Bewegung des Türgriffs 11 eingeleitet worden ist, ist diese nur bis zu der in der Figur 9 dargestellten Zwischenstellung der Crashsperre 14 möglich. Anschließend muss der Türgriff 11 und/oder die Kopplungseinheit 13 zunächst in die Ruhestellung la überführt werden, wozu der Türgriff 11 ebenfalls mit einer Feder belastet ist, damit er in diese Ruhestellung la selbstständig überführt wird. Zusätzlich kann auch die Kopplungseinheit 13 federbelastet ausgestaltet sein, um selbstständig die Ruhestellung la zu erreichen. Sobald nun der Türgriff 11 und/oder die Kopplungseinheit 13 die Ruhestellung la erreicht, kann sich die Crashsperre 14 weiter im Uhrzeigersinn in Richtung zur Normallage IIa drehen. Hierzu ist die bereits erwähnte Feder 15 vorgesehen, die auch an anderer Stelle als in der Figur 9 eingezeichnet zwischen der Crashsperre 14 und dem Lagerrahmen 12 vorgesehen sein kann.

Sobald die Crashsperre 14 wieder in ihrer Normallage IIa verweilt, lässt sich auch der Türgriff 11 und/oder die Kopplungseinheit 13 wieder frei zwischen der Ruhestellung la und der Arbeitsstellung Ib hin und her bewegen, um das Schloss 52 zu betätigen. Diese Stellung ist in der Figur 10 dargestellt, wobei deutlich zu erkennen ist, dass der Vorsprung 13.5 von der Kopplungseinheit 13 ungehindert an der Ausnehmung 14.4 bzw. dem Freiraum 14.4 der Crashsperre 14 entlang gleitet.

In der Figur 11 ist das Funktionsdiagramm der erfindungsgemäßen Türgriffeinheit 10 im Crashfall dargestellt. Das Bezugszeichen 101 und 102 deutet hierbei den ersten und zweiten Crash bzw. die erste einwirkende Beschleunigungskraft 60 und die zweite einwirkende Beschleunigungskraft 60 an. Ebenfalls sind die einzelnen Phasen A, B und C in dem Funktionsdiagramm aufgeführt.

Phase A: Ausgehend von der ersten Einwirkung einer Beschleunigungskraft (s. Bezugszeichen 101) wird nun die Crashsperre 14 im Gegenuhrzeigersinn in Richtung der ersten Blockierlage IIb1 gedreht (s. Bezugszeichen 111). Ferner wird durch diese einwirkende Beschleunigungskraft 60 auch die Kopplungseinheit 13 von der Ruhestellung la in Richtung der Arbeitsstellung Ib gedreht, was durch das Bezugszeichen 121 angedeutet ist. Ausgehend von dem Bezugszeichen 121 kann nun die Kopplungseinheit 13 wieder in ihre Ruhestellung la gedreht werden (s. Bezugszeichen 123).

Phase B: Durch das Bezugszeichen 112 wird angedeutet, dass die Crashsperre 14 ausgehend von der ersten Blockierlage IIb1 im Gegenuhrzeigersinn durch die Feder 15 gedreht wird. Hierdurch kann die Crashsperre 14 wieder in ihre Normallage IIa überführt werden (s. Bezugszeichen 114), falls keine Längsverschiebung der Crashsperre 14 stattgefunden hat. Sofern jedoch eine Längsverschiebung durch die Feder 15 an der Crashsperre 14 erfolgt ist, stoppt die Crashsperre 14 in der zweiten Blockierlage IIb2, was durch das Bezugszeichen 113 angedeutet ist.

Phase C: Aus dieser zweiten Blockierlage IIb2 (s. Bezugszeichen 113) lässt sich die Crashsperre 14 entweder durch eine zweite einwirkende Beschleunigungskraft (s. Bezugszeichen 102) oder durch eine manuelle Betätigung des Türgriffs 11 (s. Bezugszeichen 130) wieder in die Normallage IIa überführen. Sofern im zweiten Fall eine manuelle Entriegelungsbetätigung des Türgriffs 30 (s. Bezugszeichen 130) erfolgt, wird die Crashsperre 14 gegen die Federkraft der Feder 15 längsverschoben und anschließend aus der zweiten Blockierlage IIb2 in Richtung Normallage IIa gedreht. Hierbei blockiert jedoch die Crashsperre 14 die Kopplungseinheit 13, die zunächst wieder in ihre Ruhestellung la überführt werden muss, damit nun die Crashsperre 14 vollständig in die Normallage IIa gedreht werden kann. Im ersten Fall, bei dem in der zweiten Blockierlage IIb2 eine weitere Beschleunigungskraft 60 auf die Crashsperre 14 wirkt (s. Bezugszeichen 102) wird die Kopplungseinheit 13 ebenfalls durch die Crashsperre 14 geblockt (s. Bezugszeichen 122), so dass diese nur in Richtung der Ruhestellung la gedreht werden kann. Die Drehung der Kopplungseinheit 13 ist mit dem Bezugszeichen 123 in der Figur 11 dargestellt. Ebenfalls erfolgt durch die zuvor beschriebene Bewegung der Kopplungseinheit 13 aus dem Bezugszeichen 122 und 123 eine Längsverschiebung und Drehung der Crashsperre 14 um wieder die Normallage IIa, wie bereits beim Bezugszeichen 114 beschrieben worden ist, zu erreichen. Anschließend befindet sich die Crashsperre 14 wieder in ihrer Normallage IIa, so dass nunmehr entweder ein neuer Crash stattfinden kann oder aber eine normale Betätigung der Türgriffeinheit 10 erfolgen kann.

Abschließend sei erwähnt, dass die vorliegende Erfindung nicht auf das dargestellte Ausführungsbeispiel beschränkt ist, so können, wie bereits erwähnt, auch die Anschläge der Crashsperre bzw. des Lagerrahmens als zumindest teilweise schräge Steuerflächen ausgestaltet sein, um hierdurch die Längsverschiebung der Crashsperre 14 zu erzeugen. Darüber hinaus sind auch mechanisch komplementäre unter die Ansprüche fallende Ausgestaltungen der Erfindung denkbar, die ebenfalls unter Schutz gestellt werden.

### Bezugszeichenliste

- 10: Türgriffeinheit
- 11: Türgriff
- 12: Lagerrahmen
- 12.1: erster Gegenanschlag
- 12.2: zweiter Gegenanschlag
- 12.3: dritter Gegenanschlag
- 12.4: vierter Gegenanschlag
- 12.5: erste Seite
- 12.6: zweite Seite
- 12.7: dritter Seite
- 12.8: Aufnahme für 14
- 13: Kopplungseinheit
- 13.1: Ausgleichsmasse
- 13.2: Ansatz für Übertragungselement
- 13.3: Aufnahme für 11
- 13.5: Vorsprung für 14
- 14: Crashsperre
- 14.1: erster Anschlag
- 14.2: zweiter Anschlag
- 14.3: dritter Anschlag
- 14.4: Ausnehmung oder Freiraum
- 14.5: Masse
- 14.6: Scheibensegment
- 14.7: Angriffsfläche
- 15: Feder
- 15.1: erstes Ende
- 15.2: zweites Ende
- 16: Achse für 14
- 17: Achse für 13

- 50: Fahrzeug
- 51: Tür
- 52: Schloss
- 60: Richtung der Beschleunigungskraft
- 101: ersten Crash bzw. erste einwirkende Beschleunigungskraft 60
- 102: zweiter Crash bzw. zweite einwirkende Beschleunigungskraft 60

- 111: Drehung von 14 im Gegenuhrzeigersinn in Richtung erste Blockierlage
- 112: Drehung von 14 im Uhrzeigersinn in Richtung Normallage
- 113: zweite Blockierlage IIB2 von 14
- 114: Erreichen der Normallage von 14

- 121: Blocken von 11,13 durch 14 in der ersten Blockierlage IIB1
- 122: Blocken von 11, 13 durch 14 in der zweiten Blockierlage IIB2

- 130: manuelle Entriegelungsbewegung von 11, 13

Türgriff:
- la: Ruhestellung
- Ib: Arbeitsstellung

Crashsperre:
- IIa: Normallage
- IIb1: erste Blockierlage
- IIb2: zweite Blockierlage

## Patentansprüche

1. Türgriffeinheit (10) für ein Schloss (52) bei einem Fahrzeug (50) mit einem Türgriff (11), der zum Öffnen einer Tür (51), Klappe oder dergleichen durch einen Benutzer in einem Lagerrahmen (12) bewegbar gelagert ist, wobei der Türgriff (11) zumindest eine Ruhestellung (Ia) und eine Arbeitsstellung (Ib) aufweist,
einer mechanischen Kopplungseinheit (13), durch die eine Bewegung des Türgriffs (11) von der Ruhestellung (Ia) in die Arbeitsstellung (Ib) auf das Schloss (52) übertragbar ist, einer Crashsperre (14) die zumindest eine Normallage (IIa) und eine Blockierlage (IIb) aufweist, wobei die Crashsperre (14) in ihrer Normallage (IIa) eine Bewegung des Türgriffs (11) und/oder der Kopplungseinheit (13) zur Betätigung des Schlosses (52) zulässt und in der Blockierlage (IIb), die bei oder nach Einwirkung einer Beschleunigungskraft (60) vorliegt, insbesondere bei einem Unfall, eine Bewegung des Türgriffs (11) und/oder der Kopplungseinheit (13) derart blockiert, dass eine Betätigung des Schlosses (52) vermieden wird,
**dadurch gekennzeichnet,**
**dass** die Crashsperre (14) in ihrer Blockierlage (IIb) durch eine Bewegung des Türgriffs (11) und/oder der Kopplungseinheit (13) in die Normallage (IIa) überführbar ist, wobei die Crashsperre (14) eine erste Blockierlage (IIb1) bei der Einwirkung der Beschleunigungskraft (60) aufweist und eine zweite Blockierlage (IIb2) aufweist, in der die Crashsperre stabil gehalten ist, und wobei die Crashsperre (14) durch eine Feder (15) mechanisch belastet ist,
um die Crashsperre (14) aus der ersten Blockierlage(IIb1) in die zweite Blockierlage (IIb2) zu überführen.

2. Türgriffeinheit (10) nach Anspruch 1,
**dadurch gekennzeichnet,**
**dass** die Crashsperre (14) in ihrer Blockierlage (IIb) nur durch eine Bewegung des Türgriffs (11) und/oder der Kopplungseinheit (13) in die Normallage (IIa) überführbar ist.

3. Türgriffeinheit (10) nach einem der vorgehenden Ansprüche,
**dadurch gekennzeichnet,**
**dass** die Crashsperre (14) und/oder die Kopplungseinheit (13) bewegbar am Lagerrahmen (12) gelagert sind,
wobei insbesondere die Crashsperre (14) und/oder die Kopplungseinheit (13) mit einer festen Masse (13.1,14.5) verbunden sind.

4. Türgriffeinheit (10) nach einem der vorgehenden Ansprüche,
**dadurch gekennzeichnet,**
**dass** die Crashsperre (14) drehbar um eine Achse (16) und axial verschiebbar zur Achse (16) gelagert ist, um zumindest die Normallage (IIa) und die Blockierlage (IIb) zu erreichen,
wobei insbesondere die Achse (16) am Lagerrahmen (12) angeordnet ist.

5. Türgriffeinheit (10) nach einem der vorgehenden Ansprüche,
**dadurch gekennzeichnet,**
**dass** die Feder (15) als Druck- und/oder Drehfeder (15) ausgestaltet ist, um die Crashsperre (14) aus zumindest der ersten Blockierlage (IIb1) in die Normallage (IIa) zu überführen.

6. Türgriffeinheit (10) nach einem der vorgehenden Ansprüche,
**dadurch gekennzeichnet,**
**dass** die Crashsperre (14) in zumindest einer Blockierlage (IIb) formschlüssig eine Bewegung des Türgriffs (11) und/oder der Kopplungseinheit (13) blockiert.

7. Türgriffeinheit (10) nach einem der vorgehenden Ansprüche,
**dadurch gekennzeichnet,**
**dass** an dem Türgriff (11) und/oder der Kopplungseinheit (13) zumindest ein Vorsprung (13.5) angeordnet ist, der mit der Crashsperre (14) insbesondere formschlüssig mechanisch zusammenwirkt.

8. Türgriffeinheit (10) nach einem der vorgehenden Ansprüche,
**dadurch gekennzeichnet,**
**dass** die Crashsperre (14) in der ersten Blockierlage (IIb1) nur um die Achse (16) gedreht ist, und die Crashsperre (14) insbesondere einen ersten, insbesondere seitlichen Anschlag (14.1) zum Lagerrahmen (12) aufweist und/oder
die Crashsperre (14) insbesondere einen zweiten Anschlag (14.2), insbesondere Drehanschlag (14.2) zum Lagerrahmen (12) aufweist.

9. Türgriffeinheit (10) nach einem der vorgehenden Ansprüche,
**dadurch gekennzeichnet,**
**dass** die Crashsperre (14) in der zweiten Blockierlage (IIb1) um die Achse (16) gedreht und axial längsverschoben zur Normallage (IIa) ist,
und insbesondere die Crashsperre (14) einen dritten Anschlag (14.3) zum Lagerrahmen (12) aufweist, wodurch die Crashsperre (14) stabil in der zweiten Blockierlage (IIb1) gehalten ist.

10. Türgriffeinheit (10) nach einem der vorgehenden Ansprüche,
**dadurch gekennzeichnet,**
**dass** ebenfalls der zweite Anschlag (14.2) der Crashsperre (14) formschlüssig eine Bewegung des Türgriffs (11) und/oder der Kopplungseinheit (13) blockiert, sofern die Crashsperre (14) zuvor in der zweiten Blockierlage (IIb1) angeordnet war.

11. Türgriffeinheit (10) nach einem der vorgehenden Ansprüche,
**dadurch gekennzeichnet,**
**dass** die Crashsperre (14) die stabile, zweite Blockierlage (IIb1) durch eine zusätzliche Bewegung des Türgriffs (11) und/oder der Kopplungseinheit (13) verlässt,
wobei insbesondere die zusätzliche Bewegung des Türgriffs (11) und/oder der Kopplungseinheit (13) zu einer axialen Verschiebung der Crashsperre (14) führt, sodass der dritte Anschlag (14.3) wirkungsfrei mit dem Lagerrahmen (12) ist und/oder wobei insbesondere der zweite Drehanschlag (14.2) der Crashsperre (14) formschlüssig die zusätzliche Bewegung des Türgriffs (11) und/oder der Kopplungseinheit (13) blockiert.

12. Verfahren zur Sicherung einer Türgriffeinheit (10) für ein Schloss (52) bei einem Fahrzeug (50) mit
einem Türgriff (11), der zum Öffnen einer Tür (51), Klappe oder dergleichen durch einen Benutzer in einem Lagerrahmen (12) bewegbar gelagert ist, wobei der Türgriff (11) zumindest eine Ruhestellung (Ia) und eine Arbeitsstellung (Ib) aufweist,
einer mechanischen Kopplungseinheit (13), durch die eine Bewegung des Türgriffs (11) von der Ruhestellung (la) in die Arbeitsstellung (Ib) auf das Schloss (52) übertragbar ist, einer Crashsperre (14) die zumindest eine Normallage (IIa) und eine Blockierlage (IIb) aufweist, wobei die Crashsperre (14) in ihrer Normallage (IIa) eine Bewegung des Türgriffs (11) und/oder der Kopplungseinheit (13) zur Betätigung des Schlosses (52) zulässt und in der Blockierlage (IIb), die bei oder nach Einwirkung einer Beschleunigungskraft (60) vorliegt, insbesondere bei einem Unfall, eine Bewegung des Türgriffs (11) und/oder der Kopplungseinheit (13) derart blockiert, dass eine Betätigung des Schlosses (52) vermieden wird,
**dadurch gekennzeichnet,**
**dass** die Crashsperre (14) in ihrer Blockierlage (IIb) durch eine Bewegung des Türgriffs (11) und/oder der Kopplungseinheit (13) in die Normallage (IIa) überführbar ist, wobei die Crashsperre (14) eine erste Blockierlage (IIb1) bei der Einwirkung der Beschleunigungskraft (60) aufweist und eine zweite Blockierlage (IIb2) aufweist, in der die Crashsperre stabil gehalten ist, und wobei die Crashsperre (14) durch eine Feder (15) mechanisch belastet ist, um die Crashsperre (14) aus der ersten Blockierlage (IIb1) in die zweite Blockierlage (IIb2) zu überführen.

13. Verfahren zur Sicherung einer Türgriffeinheit (10) nach Anspruch 12, **dadurch gekennzeichnet,**
**dass** ein Türgriffeinheit (10) nach einem der Ansprüche 1 bis 12 vorgesehen ist.

14. Verfahren zur Sicherung einer Türgriffeinheit (10) nach Anspruch 12 oder 13, **dadurch gekennzeichnet,**
**dass** bei einer Einwirkung der Beschleunigungskraft (60) die Crashsperre (14) insbesondere durch eine Drehung selbstständig in die erste Blockierlage (IIb1) überführt wird und eine vorhandene Bewegung des Türgriffs (11) und/oder der Kopplungseinheit (13) derart blockiert wird, dass eine Betätigung des Schlosses (52) sicher vermieden wird, wobei insbesondere durch diese geblockte Bewegung des Türgriffs (11) und/oder der Kopplungseinheit (13) verursacht wird, dass die Crashsperre (14) anschließend ihre Normallage (IIa) einnimmt.

15. Verfahren zur Sicherung einer Türgriffeinheit (10) nach einem der Ansprüche 12 bis 14, **dadurch gekennzeichnet,**
**dass** die Crashsperre (14) aus der stabilen, zweiten Blockierlage (IIb2) ausschließlich durch eine zusätzliche Bewegung des Türgriffs (11) und/oder der Kopplungseinheit (13) in ihre Normallage (IIa) überführt wird,
wobei insbesondere diese zusätzliche Bewegung zunächst formschlüssig von der Crashsperre (14) geblockt wird, und/oder
wobei insbesondere die Crashsperre (14) erst dann ihre Normallage (IIa) einnimmt, wenn der Türgriff (11) sich in seine Ruhestellung (la) bewegt.

## Claims

1. A door handle unit (10) for a lock (52) in a vehicle (50) with
a door handle (11) which, for opening a door (51), hatch or suchlike by a user, is movably mounted in a bearing frame (12), wherein the door handle (11) has at least one resting position (Ia) and one operating position (Ib),
a mechanical coupling unit (13), by which a movement of the door handle (11) from the resting position (Ia) into the operating position (Ib) is able to be transferred to the lock (52),
a crash block (14), which has at least one normal position (IIa) and one blocking position (IIb), wherein the crash block (14) in its normal position (IIa) permits a movement of the door handle (11) and/or of the coupling unit (13) for actuation of the lock (52), and in the blocking position (IIb), which is present in the case of or after the action of an acceleration force (60), in particular in the case of an accident, blocks a movement of the door handle (11) and/or of the coupling unit (13) such that an actuation of the lock (52) is prevented,
**characterized in that**
the crash block (14) in its blocking position (IIb) is able to be transferred into the normal position (IIa) by a movement of the door handle (11) and/or of the coupling unit (13), wherein the crash block (14) has a first blocking position (IIb1) in the case of the action of the acceleration force (60), and a second blocking position (IIb2), in which the crash block is held stable, and wherein the crash block (14) is mechanically stressed by a spring (15), in order to transfer the crash block (14) from the first blocking position (IIb1) into the second blocking position (IIb2).

2. The door handle unit (10) according to claim 1,
**characterized in that**
the crash block (14) in its blocking position (IIb) is able to be transferred into the normal position (IIa) only by a movement of the door handle (11) and/or of the coupling unit (13).

3. The door handle unit (10) according to one of the preceding claims,
**characterized in that**
the crash block (14) and/or the coupling unit (13) are mounted movably on the bearing frame (12),
wherein in particular the crash block (14) and/or the coupling unit (13) are connected to a fixed mass (13.1, 14.5).

4. The door handle unit (10) according to one of the preceding claims,
**characterized in that**
the crash block (14) is mounted rotatably about an axis (16) and axially displaceably to the axis (16), in order to reach at least the normal position (IIa) and the blocking position (IIb),
wherein in particular the axis (16) is arranged on the bearing frame (12).

5. The door handle unit (10) according to one of the preceding claims,
**characterized in that**
the spring (15) is configured as a compression and/or torsion spring (15), in order to transfer the crash block (14) from at least the first blocking position (IIb1) into the normal position (IIa).

6. The door handle unit (10) according to one of the preceding claims,
**characterized in that**
the crash block (14) in at least a blocking position (IIb) blocks in a form-fitting manner a movement of the door handle (11) and/or of the coupling unit (13).

7. The door handle unit (10) according to one of the preceding claims,
**characterized in that**
at least one projection (13.5) is arranged on the door handle (11) and/or on the coupling unit (13), which projection cooperates mechanically with the crash block (14), in particular in a form-fitting manner.

8. The door handle unit (10) according to one of the preceding claims,
**characterized in that**
the crash block (14) in the first blocking position (IIb1) is rotated only about the axis (16), and the crash block (14) has in particular a first, in particular lateral stop (14.1) to the bearing frame (12) and/or
the crash block (14) has in particular a second stop (14.2), in particular rotary stop (14.2) to the bearing frame (12).

9. The door handle unit (10) according to one of the preceding claims,
**characterized in that**
the crash block (14) in the second blocking position (IIb1) is rotated about the axis (16) and is axially longitudinally displaced to the normal position (IIa),
and in particular the crash block (14) has a third stop (14.3) to the bearing frame (12), whereby the crash block (14) is held in a stable manner in the second blocking position (IIb1).

10. The door handle unit (10) according to one of the preceding claims,
**characterized in that**
likewise the second stop (14.2) of the crash block (14) blocks in a form-fitting manner a movement of the door handle (11) and/or of the coupling unit (13), in so far as the crash block (14) was previously arranged in the second blocking position (IIb1).

11. The door handle unit (10) according to one of the preceding claims,
**characterized in that**
the crash block (14) leaves the stable, second blocking position (IIb1) by an additional movement of the door handle (11) and/or of the coupling unit (13),
wherein in particular the additional movement of the door handle (11) and/or of the coupling unit (13) leads to an axial displacement of the crash block (14), so that the third stop (14.3) is free of action with the bearing frame (12) and/or
wherein in particular the second rotary stop (14.2) of the crash block (14) blocks in a form-fitting manner the additional movement of the door handle (11) and/or of the coupling unit (13).

12. A method for securing a door handle unit (10) for a lock (52) in a vehicle (50) with
a door handle (11) which, for opening a door (51), hatch or suchlike by a user, is movably mounted in a bearing frame (12), wherein the door handle (11) has at least one resting position (Ia) and one operating position (Ib),
a mechanical coupling unit (13), by which a movement of the door handle (11) is able to be transferred from the resting position (Ia) into the operating position (Ib) to the lock (52), a crash block (14), which has at least one normal position (IIa) and one blocking position (IIb), wherein the crash block (14) in its normal position (IIa) permits a movement of the door handle (11) and/or of the coupling unit (13) for actuation of the lock (52), and in the blocking position (IIb), which is present in the case of or after the action of an acceleration force (60), in particular in the case of an accident, blocks a movement of the door handle (11) and/or of the coupling unit (13) such that an actuation of the lock (52) is prevented,
**characterized in that**
the crash block (14) in its blocking position (IIb) is able to be transferred into the normal position (IIa) by a movement of the door handle (11) and/or of the coupling unit (13), wherein the crash block (14) has a first blocking position (IIb1) in the case of the action of the acceleration force (60), and a second blocking position (IIb2), in which the crash block is held stable, and wherein the crash block (14) is mechanically stressed by a spring (15), in order to transfer the crash block (14) from the first blocking position (IIb1) into the second blocking position (IIb2).

13. The method for securing a door handle unit (10) according to claim 12,
**characterized in that**
a door handle unit (10) according to one of claims 1 to 12 is provided.

14. The method for securing a door handle unit (10) according to claim 12 or 13,
**characterized in that**
in the case of an action of the acceleration force (60), the crash block (14) is transferred in particular by a rotation independently into the first blocking position (IIb1) and an existing movement of the door handle (11) and/or of the coupling unit (13) is blocked such that an actuation of the lock (52) is reliably prevented, wherein in particular through this blocked movement of the door handle (11) and/or of the coupling unit (13), it is brought about that the crash block (14) subsequently takes up its normal position (IIa).

15. The method for securing a door handle unit (10) according to one of claims 12 to 14,
**characterized in that**
the crash block (14) is transferred from the stable, second blocking position (IIb2) exclusively by an additional movement of the door handle (11) and/or of the coupling unit (13) into its normal position (IIa),
wherein in particular this additional movement is firstly blocked in a form-fitting manner by the crash block (14), and/or
wherein in particular the crash block (14) only takes up its normal position (IIa) when the door handle (11) moves into its resting position (Ia).

## Revendications

1. Unité de poignée de porte (10) pour une serrure (52) sur un véhicule (50) avec
une poignée de porte (11) qui est montée mobile dans un cadre de montage (12) pour permettre l'ouverture d'une porte (51), d'un abattant ou analogue par un utilisateur, la poignée de porte (11) présentant au moins une position de repos (Ia) et une position de travail (Ib),
une unité d'accouplement mécanique (13) qui permet de transmettre un déplacement de la poignée de porte (11) de la position de repos (Ia) dans la position de travail (Ib) à la serrure (52),
un verrou de collision (14) qui présente au moins une position normale (IIa) et une position de blocage (IIb), le verrou de collision (14) autorisant, dans sa position normale (IIa), un déplacement de la poignée de porte (11) et/ou de l'unité d'accouplement (13) pour actionner la serrure (52) et bloquant, dans la position de blocage (IIb), qui est présente lors de ou après l'action d'une force d'accélération (60), en particulier lors d'un accident, un déplacement de la poignée de porte (11) et/ou de l'unité d'accouplement (13) de manière à éviter un actionnement de la serrure (52),
**caractérisée en ce**
**que** le verrou de collision (14) dans sa position de blocage (IIb) peut être transféré dans la position normale (IIa) par un déplacement de la poignée de porte (11) et/ou de l'unité d'accouplement (13), le verrou de collision (14) présentant une première position de blocage (IIb1) lors de l'action de la force d'accélération (60) et présentant une deuxième position de blocage (IIb2) dans laquelle le verrou de collision est maintenu de manière stable, et le verrou de collision (14) étant sollicité mécaniquement par un ressort (15) pour transférer le verrou de collision (14) de la première position de blocage (IIb1) dans la deuxième position de blocage (IIb2).

2. Unité de poignée de porte (10) selon la revendication 1,
**caractérisée en ce**
**que** le verrou de collision (14) dans sa position de blocage (IIb) ne peut être transféré dans la position normale (IIa) que par un déplacement de la poignée de porte (11) et/ou de l'unité d'accouplement (13).

3. Unité de poignée de porte (10) selon l'une des revendications précédentes,
**caractérisée en ce**
**que** le verrou de collision (14) et/ou l'unité d'accouplement (13) sont montés mobiles sur le cadre de montage (12),
le verrou de collision (14) et/ou l'unité d'accouplement (13) étant en particulier reliés à une masse solide (13.1, 14.5).

4. Unité de poignée de porte (10) selon l'une des revendications précédentes,
**caractérisée en ce**
**que** le verrou de collision (14) est monté tournant autour d'un axe (16) et coulissant axialement par rapport à l'axe (16) pour atteindre au moins la position normale (IIa) et la position de blocage (IIb),
l'axe (16) étant en particulier disposé sur le cadre de montage (12).

5. Unité de poignée de porte (10) selon l'une des revendications précédentes,
**caractérisée en ce**
**que** le ressort (15) est réalisé sous la forme d'un ressort de compression et/ou de torsion (15) pour transférer le verrou de collision (14) au moins de la première position de blocage (IIb1) dans la position normale (IIa).

6. Unité de poignée de porte (10) selon l'une des revendications précédentes,
**caractérisée en ce**
**que** dans au moins une position de blocage (IIb), le verrou de collision (14) bloque par complémentarité de forme un déplacement de fa poignée de porte (11) et/ou de l'unité d'accouplement (13).

7. Unité de poignée de porte (10) selon l'une des revendications précédentes,
**caractérisée en ce**
**que** sur la poignée de porte (11) et/ou l'unité d'accouplement (13) est disposée au moins une saillie (13.5) qui coopère mécaniquement, en particulier par complémentarité de forme, avec le verrou de collision (14).

8. Unité de poignée de porte (10) selon l'une des revendications précédentes,
**caractérisée en ce**
**que** dans la première position de blocage (IIb1), le verrou de collision (14) est seulement tourné autour de l'axe (16), et le verrou de collision (14) présente en particulier une première butée (14.1), en particulier latérale, par rapport au cadre de montage (12) et/ou le verrou de collision (14) présente en particulier une deuxième butée (14.2), en particulier une butée de rotation (14.2), par rapport au cadre de montage (12).

9. Unité de poignée de porte (10) selon l'une des revendications précédentes,
**caractérisée en ce**
**que** dans la deuxième position de blocage (IIb1), le verrou de collision (14) est tourné autour de l'axe (16) et coulissé longitudinalement axialement par rapport à la position normale (IIa),
et en particulier le verrou de collision (14) présente une troisième butée (14.3) par rapport au cadre de montage (12), par laquelle le verrou de collision (14) est maintenu de manière stable dans la deuxième position de blocage (IIb1).

10. Unité de poignée de porte (10) selon l'une des revendications précédentes,
**caractérisée en ce**
**que** la deuxième butée (14.2) du verrou de collision (14) bloque également par complémentarité de forme un déplacement de la poignée de porte (11) et/ou de l'unité d'accouplement (13) si le verrou de collision (14) était auparavant disposé dans la deuxième position de blocage (IIb1).

11. Unité de poignée de porte (10) selon l'une des revendications précédentes,
**caractérisée en ce**
**que** le verrou de collision (14) quitte la deuxième position de blocage (IIb1) stable par un déplacement supplémentaire de la poignée de porte (11) et/ou de l'unité d'accouplement (13),
en particulier le déplacement supplémentaire de la poignée de porte (11) et/ou de l'unité d'accouplement (13) conduisant à un coulissement axial du verrou de collision (14) de sorte que la troisième butée (14.3) soit sans action avec le cadre de montage (12) et/ou en particulier la deuxième butée de rotation (14.2) du verrou de collision (14) bloquant par complémentarité de forme le déplacement supplémentaire de la poignée de porte (11) et/ou de l'unité d'accouplement (13).

12. Procédé pour sécuriser une unité de poignée de porte (10) pour une serrure (52) sur un véhicule (50) avec
une poignée de porte (11) qui est montée mobile dans un cadre de montage (12) pour permettre l'ouverture d'une porte (51), d'un abattant ou analogue par un utilisateur, la poignée de porte (11) présentant au moins une position de repos (Ia) et une position de travail (Ib),
une unité d'accouplement mécanique (13) qui permet de transmettre un déplacement de la poignée de porte (11) de la position de repos (Ia) dans la position de travail (Ib) à la serrure (52),
un verrou de collision (14) qui présente au moins une position normale (IIa) et une position de blocage (IIb), le verrou de collision (14) autorisant, dans sa position normale (IIa), un déplacement de la poignée de porte (11) et/ou de l'unité d'accouplement (13) pour actionner la serrure (52) et bloquant, dans la position de blocage (IIb), qui est présente lors de ou après l'action d'une force d'accélération (60), en particulier lors d'un accident, un déplacement de la poignée de porte (11) et/ou de l'unité d'accouplement (13) de manière à éviter un actionnement de la serrure (52),
**caractérisée en ce**
**que** le verrou de collision (14) dans sa position de blocage (IIb) peut être transféré dans la position normale (IIa) par un déplacement de la poignée de porte (11) et/ou de l'unité d'accouplement (13), le verrou de collision (14) présentant une première position de blocage (IIb1) lors de l'action de la force d'accélération (60) et présentant une deuxième position de blocage (IIb2) dans laquelle le verrou de collision est maintenu de manière stable, et le verrou de collision (14) étant sollicité mécaniquement par un ressort (15) pour transférer le verrou de collision (14) de la première position de blocage (IIb1) dans la deuxième position de blocage (IIb2).

13. Procédé pour sécuriser une unité de poignée de porte (10) selon la revendication 12,
**caractérisée en ce**
**qu'**une unité de poignée de porte (10) selon l'une des revendications 1 à 12 est prévue.

14. Procédé pour sécuriser une unité de poignée de porte (10) selon la revendication 12 ou 13,
**caractérisée en ce**
**que** lors d'une action de la force d'accélération (60), le verrou de collision (14) est transféré de manière autonome, en particulier par une rotation, dans la première position de blocage (IIb1) et un déplacement existant de la poignée de porte (11) et/ou de l'unité d'accouplement (13) est bloqué de manière à éviter de façon sûre un actionnement de la serrure (52),
ce déplacement bloqué de la poignée de porte (11) et/ou de l'unité d'accouplement (13) ayant en particulier pour effet que le verrou de collision (14) prend ensuite sa position normale (IIa).

15. Procédé pour sécuriser une unité de poignée de porte (10) selon l'une des revendications 12 à 14,
**caractérisée en ce**
**que** le verrou de collision (14) est transféré de la deuxième position de blocage (IIb2) stable dans sa position normale (IIa) exclusivement par un déplacement supplémentaire de la poignée de porte (11) et/ou de l'unité d'accouplement (13),
en particulier ce déplacement supplémentaire étant d'abord bloqué par complémentarité de forme par le verrou de collision (14), et/ou
en particulier le verrou de collision (14) ne prenant sa position normale (IIa) que lorsque la poignée de porte (11) se déplace dans sa position de repos (Ia).
